**Europäisches Patentamt**

**European Patent Office**

**Office européen des brevets**

(19)

(11) Publication number: **0 222 430 B1**

(12)

# EUROPEAN PATENT SPECIFICATION

(45) Date of publication of patent specification:
**16.01.91 Bulletin 91/03**

(51) Int. Cl.⁵: **A01G 25/09, F16H 29/04**

(21) Application number: **86201772.0**

(22) Date of filing: **14.10.86**

(54) **Device for driving, in steps of adjustable extent, the hose winding drum of automatic irrigation sprinklers in general.**

(30) Priority: **08.11.85 IT 4686485**

(43) Date of publication of application:
**20.05.87 Bulletin 87/21**

(45) Publication of the grant of the patent:
**16.01.91 Bulletin 91/03**

(84) Designated Contracting States:
**AT BE CH DE ES FR GB GR IT LI LU NL SE**

(56) References cited:
**AT-B- 359 766**
**AT-B- 371 662**
**US-A- 4 182 203**
**LANDTECHNIK, vol. 38, no. 9, September 1983, page 359, Lehrte;**

(73) Proprietor: **FERBO COFADSI S.R.L.**
**Via Roma Nord, 210**
**I-46020 Villa Poma (Mantova) (IT)**

(72) Inventor: **Bombarda, Ferdinando**
**206, Via Roma Nord**
**I-46020 Villa Poma (Mantova) (IT)**

(74) Representative: **Corradini, Corrado**
**STUDIO SECCHI & CORRADINI 4, Via Dante Alighieri**
**I-42100 Reggio Emilia (IT)**

## Description

This patent relates to a unit of small overall size by which the hose rewinding speed in automatic irrigation sprinklers in general can be kept constant whatever the hose winding diameter, and can be adjusted as required.

In irrigating large ground areas it is known to use inter alia automatic sprinklers which are able to automatically move from one end to the other of a strip of ground. For example, automatic sprinklers are known comprising a trolley on which a horizontal drum is rotatably mounted and carries, wound about it in several superposed layers, a hose having its free end connected to a sprinkler device disposed on a skid.

In such known automatic sprinklers, the actual irrigation water slowly rotates said drum with simultaneous rewinding of the hose and return of the sprinkler skid. To obtain optimum irrigation, two orders of problem have to be overcome in such sprinklers : the first is that the hose rewinding speed and thus the sprinkler return speed must be kept permanently constant even when the hose winding diameter varies, and the second is that said rewinding speed must be able to be adjusted as required, for example according to the type of season or the requirements of the particular type of crop.

In the prior art, automatic sprinklers are known provided with a turbine through which the water flows before entering the hose, its impeller transmitting motion to the drum by way of a transmission comprising variable diameter pulleys, the turbine speed being adjusted by means of a by-pass pipe. AT-B-359.766 also discloses a sprinkler comprising a turbine driven by the actual irrigation water, and having transmission means of the turbine motion to the drum consisting of a first crank on the turbine shaft, a connecting rod between the said first crank and a second crank which is longer than the first crank, the second crank driving, by way of a free wheel device, the means for transmitting the motion to the drum shaft, the free wheel device comprising engaging and disengaging means. Known automatic sprinklers have however drawbacks due to the excessive overall size and weight of the entire transmission system, which usually occupies the whole of one side of the trolley, or to the impossibility to winding speed while the hose winding diameter varies.

The present patent provides and protects a drum rotation device which, within the framework of a simple and economical structure of small overall size, eminently solves the stated problems.

According to the invention, said device for transmitting rotary motion in steps of adjustable extent to the hose winding drum of an automatic irrigation of the type comprising a turbine driven by the actual irrigation water and having on its shaft a first crank to which there is connected one end of a connecting rod, the other end of which is connected to a second crank which is longer than the first crank which by means of a free wheel device drives means for transmitting motion from the second crank to the drum shaft, the transmitting means comprising engagement and disengagement mean, is characterised by the fact that to the first crank is connected a first connecting rod, the big end of which is compelled to move reciprocatingly along a substantially rectilinear path of variable direction, and is itself connected to the big end of a second connecting rod connected to the second crank and which by way of the free-wheel device drives a sprocket to which means are connected for transmitting drive motion to the drum shaft, there being provided means sensitive to the winding diameter of the hose on the drum which are arranged to orientate the direction of said substantially rectilinear path from a direction close to the axis of said second connecting rod to a substantially orthogonal direction.

Furthermore according to the invention, all the aforesaid mechanisms are housed in a casing of small overall size, to be removably fixed on to the sprinkler trolley, the turbine discharge being coaxial with the drum shaft. This is advantageous for the user, for the manufacturer and for the repairer, in that in the case of damage it enables the damaged device to be quickly replaced by a new one.

The constructional characteristics and merits of the invention will be more apparent from the detailed description given hereinafter with reference to the figures of the accompanying drawings which illustrate a preferred embodiment thereof by way of non-limiting example.

Figure 1 is a diagrammatic side view of the invention disposed on a normal hose-winding trolley.

Figure 2 is a partly sectional side view of the invention to an enlarged scale.

Figure 3 is a partly sectional view from above of the preceding figure, but excluding the casing containing the mechanisms.

Figure 4 is a section on the line IV-IV of Figure 2.

Figures 5 and 6 are two views in the direction A of Figure 3, showing the safety device for engaging/disengaging the power take-off for driving the hose-winding drum during abnormal or emergency situations.

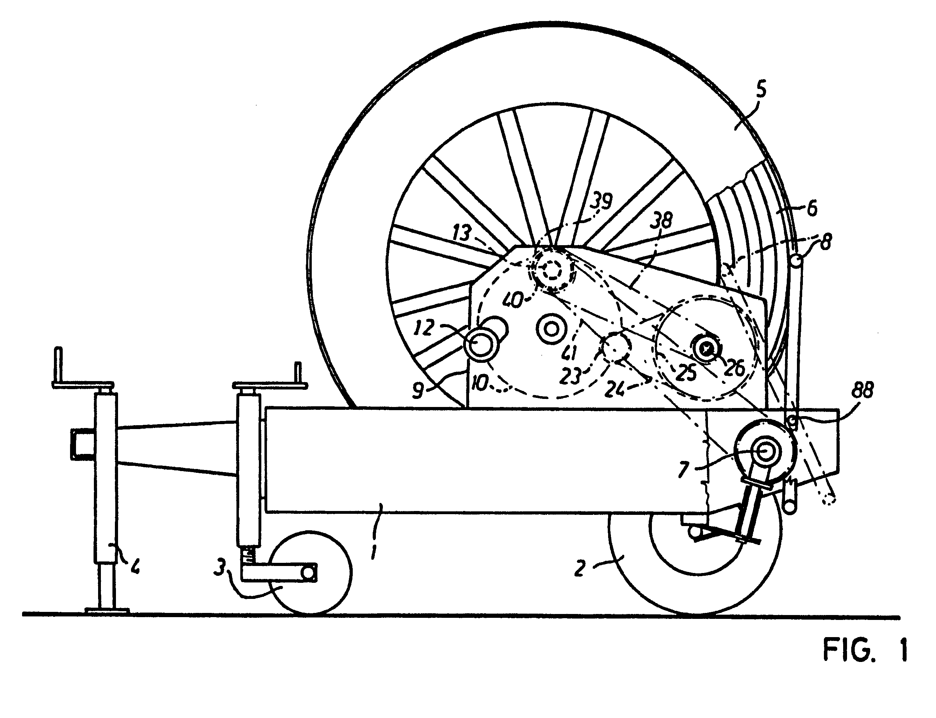

The said figures, and in particular Figure 1, show a normal trolley pertaining to a likewise normal automatic irrigation sprinkler, of which the sprinkler skid is not shown. The type of trolley shown must in no way be considered as limiting the extent of the invention, as it is suitable for application to any type of automatic sprinkler. Said trolley comprises a frame 1 mounted on two rear wheels 2 and on a front height-adjustable swivel wheel 3, in front of which there is an extendable stabilising foot 4.

On the frame 1 there is rotatably mounted, with its transverse axis horizontal, a hose-winding drum 5 on which a hose 6 is wound in several superposed helical layers and passes lowerly about a normal hose guiding device 7, its free end then being connected to a sprinkler mounted on a skid, not shown. In known manner, on commencing irrigation the skid is dragged to the end of the area to be irrigated, with simultaneous unwinding of the hose 6 which then becomes rewound by the drum 5 under the control of the device according to the invention. Moreover, to the rear of the trolley 1 there is pivoted at 88 a normal roller feeler 8 which is placed in contact with the outer layer of hose 6 wound on the drum 5.

As shown, to the side of this latter there is disposed a casing 9 which is removably fixed to the frame 1.

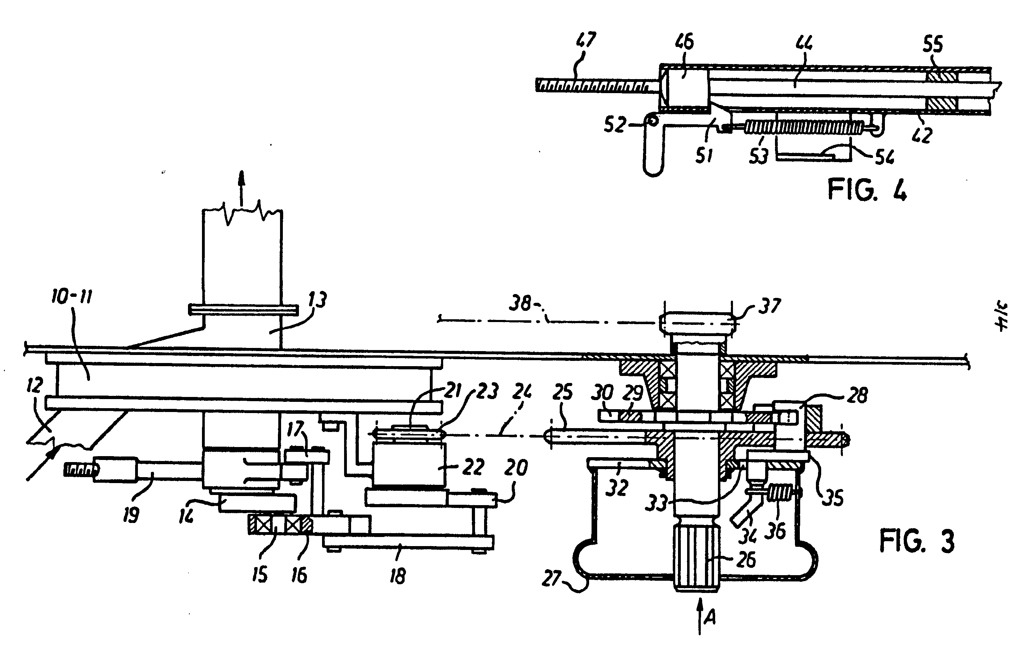

The housing 10 of a radial-bladed impeller 11 is fixed in the front end of the casing 9, into which the irrigation water is fed through an oblique inlet port 12. After travelling through an arc of between 45 and 175 degrees, as can be better seen in Figure 3, said water emerges from a rear discharge port 13 to enter the hose 6, said discharge port 13 being coaxial with one of the lateral supports for the drum 5.

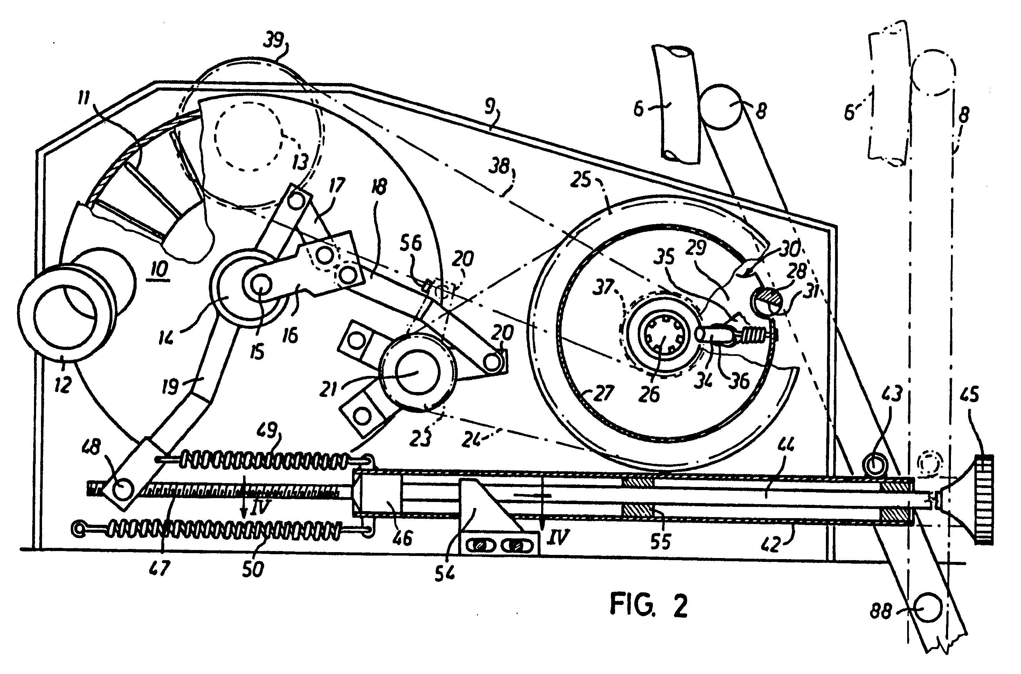

Although not shown, the inlet port 12 is intended for connection to a convenient pumping unit. The shaft of the impeller 11, indicated by 14 in Figures 2 and 3, emerges from the housing 10, where it comprises a first crank 15 on which a first connecting rod 16 is pivotally mounted. A link rod 17 and a second connecting rod 18 are pivoted to the big end of said first connecting rod 16. The link rod 17 is connected to the top of a rocker lever 19 which is idly mounted on the shaft 14 of the impeller 11, the second connecting rod 18 being connected to a second crank 20 longer than the crank 15.

The crank 20 is connected to the end of a shaft 21 (Figure 2) by way of a free wheel (not shown), the shaft 21 being rotatably mounted on a support 22 (Figure 3) by way of a second free wheel, also not shown.

On the other end of said shaft 21 there is keyed a sprocket 23 which is connected by a chain transmission 24 to a sprocket 25 idly mounted on a splined shaft 26. It is apparent that because of the different length of the cranks, the rotary motion of the first is transformed into oscillatory motion of the second, this latter motion by virtue of the free wheels being transformed into a stepwise drive motion for the shaft 21. Said gear members 23, 25 provide an initial stepdown of said stepwise motion.

The splined end of said shaft 26 faces the corresponding side of the trolley 1, where it is embraced by a rotatable hollow selection member 27 arranged to torsionally engage the sprocket 25 with, and disengage it from, said shaft 26. The engagement/disengagement between the sprocket 25 and shaft 26 takes place as follows.

As can be seen from Figures 3, 5 and 6 taken together, an eccentric pin 28 is idly mounted on the said sprocket 25.

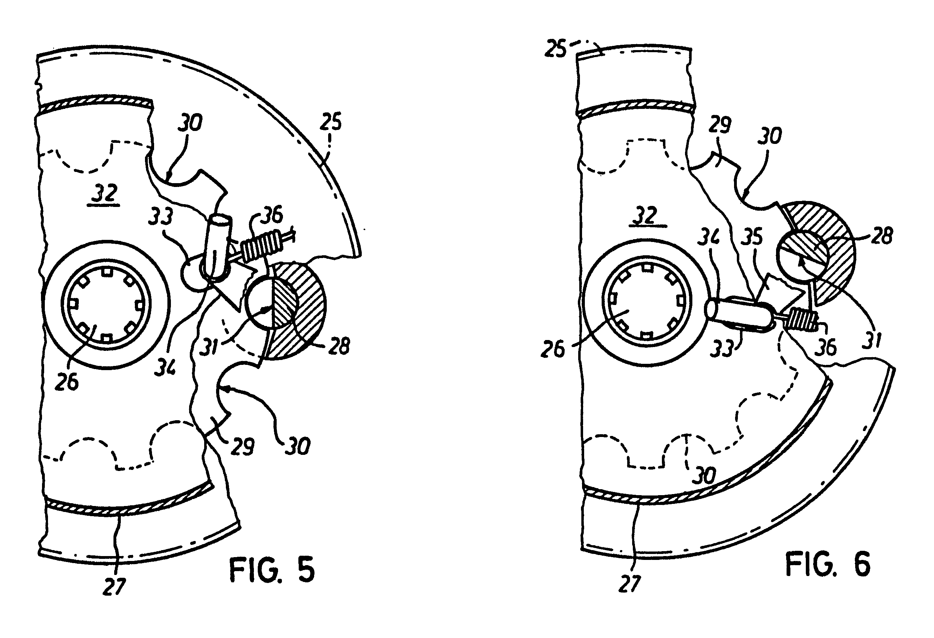

The transverse contour of the pin 28 is partly superposed on the marginal edge of a disc 29 disposed in proximity to the sprocket 25 and keyed on the splined shaft 26. Said disc 29 is provided with a circumferential series of equidistant semicircular notches 30 having a diameter practically equal to the diameter of the pin 28. The pin 28 is provided with a transverse slot 31 in which the end of said dics 29 slides freely when this slot is disposed tangentially to this latter (see Figure 5), with simultaneous disconnection of the transmission between the disc 29 and sprocket 25. In contrast, said sprocket 25 and disc 29 become engaged when the slot 31 is rotated such that the solid part of the pin 28 becomes inserted into one of the notches 30 (Figure 6). In order to position the pin 28 in one of the aforesaid ways, on the base 32 of the selector 27 there is provided a radial slot 33 traversed by a peg 34. Fixed to the end of this latter there is an orthogonal lever 35 which at its opposite end is fixed to the pin 28, there being provided between said selector 27 and peg 34 a tension spring arranged to retain the pin 28 in the selected position.

The free end of said peg is conveniently bent laterally such that when the pin 28 is engaged in 30, it is impossible to mount a drive sleeve on the end of the splined shaft 26 (see Figures 3 and 6). Moreover, when the pin 28 is not engaged in 30, the drum 5 can be driven directly by way of the splined shaft 26, this being done when special or abnormal situations arise, such as in the case of faults or if it is required to completely empty the hose 6 at the end of the irrigation season.

Furthermore, although not shown it should be noted that an adjustable brake is associated with the disc 29 to prevent it undergoing unwanted rotation. The second free wheel nominated heretofore with reference to the shaft 21 is also provided for the same purpose.

Returning to Figure 3, on the other end of the splined shaft 26 there is keyed a sprocket 37 which by way of a chain 38 drives a sprocket 39 fixed coaxially to the side of the drum 5. As can be seen in Figure 1, the said drum 5 comprises a second sprocket 40 which drives the hose guiding device 7 by way of a chain 41.

The means described hereinafter with reference to Figures 2 and 4 are provided in order to adjust the rewinding speed of the hose 6 and to make this speed uniform whatever the layer on which the hose is being wound. Said means comprise a tube 42 hinged at 43 to the feeler 8 and slidingly carrying a rotatable rod 44 provided at the end closer to the feeler 8 with an adjustment knob 45. At the other end of the rod 44 there is an enlarged portion 46 from which a threaded stem 47 extends and engages in an idle pin 48 provided at the lower end of the rocker lever 19.

There are also provided two tension springs 49, 50, the first 49 connecting the rocker lever 19 to the tube 42, and the second 50 engaged with this latter and with the casing 9 in order to ensure contact between the feeler 8 and the hose 6 wound on the drum 5.

During winding of the hose 6, the enlarged portion 46 is kept in the position shown in Figure 2 by a pawl 51 which penetrates into the tube 42 through a convenient aperture (Figure 4). Said pawl 51 is pivoted at 52 to the tube and is kept in its locking position by a tension spring 53.

When a hose layer is completed on the drum 5 and winding of the superposed layer commences, the feeler 8 rotates clockwise (Figure 1) and drags the rocker lever 19 anticlockwise. The upper end of this latter, through the link rod 17, drags the big end of the first connecting rod 16, compelling it to oscillate in a direction displaced from the axis of the second connecting rod 18, to reduce the oscillation amplitude of the second crank 20.

On termination of winding, the sprinkler support skid hits against the base of the feeler 8, and this latter rotates to drag the rod 42, 47 so that the pawl 51 becomes released by a counteracting member 54, and the spring 49 pulls the threaded stem 47 into the tube 42 until the enlarged portion 46 rests against the stop 55 (Figures 2, 4).

In this manner, the upper end of the rocker lever 19, through the link rod 17, drags the big end of the first connecting rod 16, compelling it to oscillate in a direction approximately orthogonal to the axis of the second connecting rod 18, so that this latter and with it the second crank 20 become virtually insensitive to the oscillations of the big end of the first connecting rod 16, and the drum stops. This can also be done by manually releasing the pawl 15, for example if the hose 6 winds improperly and forms incomplete layers. In such a case, as stated, the drum halts while the impeller 11 continues to rotate. When in said position, the second crank 20 rests against a stop 56 (Figure 1) to prevent jamming.

For a new irrigation operation, the hose is unwound, the tube 42 re-enters the casing 9, and the operator inserts the rod 44 to engage the enlarged portion 56 with the pawl 51.

Finally, to adjust the rewinding speed of the hose 6 it is necessary only to screw the threaded stem 47 into the idle pin 48 to a greater or lesser extent.

# Claims

1. A device for transmitting rotary motion in steps of adjustable extent to the hose winding drum (5) of an automatic irrigation sprinkler of the type comprising a turbine (11) driven by the actual irrigation water, and having on its shaft (14) a first crank (15) to which there is connected one end of a connecting rod (16), the other end of which is connected to a second crank (20) which is longer than the first crank, which by means of a free wheel device drives means for transmitting motion from the second crank to the drum shaft, the transmitting means comprising engagement and disengagement means (25, 28, 29) characterised by the fact that to the first crank (15) is connected a first connecting rod (16), the big end of which is compelled to move reciprocatingly along a substantially rectilinear path of variable direction, and is itself connected to the big end of a second connecting rod (18) connected to the second crank (20) and which by way of the free-wheel device drives a sprocket (23) to which means (24, 38) are connected for transmitting drive motion to the drum shaft (5), there being provided means (8) sensitive to the winding diameter of the hose on the drum, which are arranged to orientate the direction of said substantially rectilinear path from a direction close to the axis of said second connecting rod (18) to a subtantially orthogonal direction.

2. A device as claimed in claim 1, characterised in that the drive turbine (10) is a turbine with radial blades (11), the water inlet (12) being inclined in the direction of rotation and disposed on one side of the turbine housing, and the water outlet (13) being disposed on the opposite side and offset with respect to the inlet by an angle of between 45 and 175 degrees.

3. A device as claimed in claim 1, characterised in that the means for orientating the direction of the path of the big end of said first connecting rod (16) comprise a feeler (8) in the form of a lever sensitive to the hose winding diameter and connected by a rod (42, 47) to a rocker lever (19) which swivels about the axis of said first crank (15), the opposite end of said rocker lever being connected by a link rod (17) to the big end of said first connecting rod (16).

4. A device as claimed in claim 3, characterised in that said rod (42, 47) is a telescopic rod which stably assumes a position of minimum extension, in which the rocker lever (19) restrains the big end of said first connecting rod (16) such that it oscillates in a direction substantially orthogonal to the axis of said second connecting rod (18), or a position of maximum extension in which the rocker lever (19) restrains the big end of said first connecting rod (16) such that it oscillates in a position intermediate between said orthogonal direction and the axis of said second connecting rod (18).

5. A device as claimed in claim 3, characterised in that the maximum length of said telescopic rod (42, 47) can be adjusted by means of a screw-internal thread device (47, 48).

6. A device as claimed in claim 3, characterised in that said rod (42, 47) is kept in its position of maximum extension by a pawl (51) which when the hose winding reaches its maximum diameter, is automatically released by a counteracting member (54) fixed to the device casing.

7. A device as claimed in claim 1, characterised in that the engagement and disengagement means consist of a drive sprocket (25) idle on the driven shaft, a disc (29) keyed on to this latter and parallel to the sprocket (25), and an orthogonal pin (28) rigid with said sprocket and arranged to engage in and disengage from equidistant semicircular notches (30) formed in the edge of the disc (29), said pin being provided with a transverse slot (31) through one half of its cross-section, and said engagement/disengagement being determined by rotating the pin such that the solid part of the pin beyond the slot either interferes or does not interfere with said semicircular notches.

8. A device as claimed in claim 7, characterised in that the pin comprises a bent end (34) which, when the solid part of the pin is located within a notch, prevents an auxiliary drive sleeve being mounted on the end of the driven shaft (26).

## Ansprüche

1. Vorrichtung zur stufenweisen Übertragung einer Drehbewegung von einstellbarem Ausmaß auf eine Schlauchtrommel (5) einer automatischen Bewässerungseinrichtung mit einer Turbine (11), die durch das vorhandene Bewässerungswasser angetrieben ist, und die auf ihrer Welle (14) eine erste Kurbel (15) besitzt, mit der ein Ende eines Verbindungsstabes (16) verbunden ist, dessen anderes Ende mit einer zweiten Kurbel (20) verbunden ist, die länger ist als die erste Kurbel, die mittels einer Freilaufeinrichtung eine Einrichtung zur Übertragung einer Bewegung von der zweiten Kurbel auf die Trommelwelle antreibt, wobei die Übertragungseinrichtung Eingriffs- und Nichteingriffseinrichtungen (25, 28, 29) aufweist, **dadurch gekennzeichnet**, daß mit der ersten Kurbel (15) ein erster Verbindungsstab (16) verbunden ist, dessen anderes Ende (big end) gezwungen ist sich reziprozierend entlang eines im wesentlichen geradlinigen Weges einer variablen Richtung zu bewegen und der selbst mit dem anderen Ende (big end) eines zweiten Verbindungsstabes (18) verbunden ist, der mit der zweiten Kurbel (20) verbunden ist und der durch die Freilaufeinrichtung ein Kettenrad (23) antreibt, mit dem Glieder (24, 38) zur Übertragung einer Antriebsbewegung zu der Trommelwelle (5) verbunden sind, wobei eine Einrichtung (8) vorgesehen ist, die auf den Windungsdurchmesser des Schlauches auf der Trommel anspricht, und die dazu vorgesehen ist die Richtung des im wesentlichen geradlinigen Pfades von einer Richtung nahe der Achse des zweiten Verbindungsstabes (18) zu einer im wesentlichen orthogonalen Richtung dazu festzulegen.

2. Vorrichtung nach Anspruch 1, **dadurch gekennzeichnet**, daß die Antriebsturbine (10) eine Turbine mit radialen Schaufeln (11) ist, wobei der Wassereinlaß (12) gegen die Drehrichtung geneigt ist und auf einer Seite des Turbinengehäuses angeordnet ist, und der Wasserauslaß (13) auf der gegenüberliegenden Seite und bezogen auf den Einlaß in einem Winkel zwischen 45° und 175°C versetzt ist.

3. Vorrichtung nach Anspruch 1, **dadurch gekennzeichnet**, daß die Einrichtung zur Festlegung der Richtung des Pfades des anderen Endes des Verbindungsstabes (16) einen Fühler (8) in Form eines Fühlhebels auf den Schlauchwindungsdurchmesser aufweist, und der mit einem Stab (42, 47) an einem Schwinghebel (19) befestigt ist, der um die Achse der ersten Kurbel (15) schwingt, wobei das gegenüberliegende Ende des Schwinghebels durch einen Anlenkstab (17) mit dem anderen Ende des ersten Verbindungsstabes (16) verbunden ist.

4. Vorrichtung nach Anspruch 3, **dadurch gekennzeichnet**, daß der Stab (42, 47) ein Teleskopstab ist, der stabil eine Position von einer minimalen Erstreckung einnimmt, in der der Schwinghebel (19) das andere Ende des Verbindungsstabes (16) so zurückhält, daß er in einer Richtung im wesentlichen orthogonal zur Achse des zweiten Verbindungsstabes (18) schwingt, oder eine Position einer maximalen Erstreckung, in der der Schwinghebel (19) das andere Ende des ersten Verbindungsstabes (16) so zurückhält, daß er in einer Position, die zwischen der orthogonalen Richtung und der Achse des zweiten Verbindungsstabes (18) liegt.

5. Vorrichtung nach Anspruch 3, **dadurch gekennzeichnet**, daß die maximale Länge des Teleskopstabes (42, 47) mittels einer Innenschraubverbindung (47, 48) angepaßt werden kann.

6. Vorrichtung nach Anspruch 3, **dadurch gekennzeichnet**, daß der Stab (42, 47) in seiner Position der maximalen Erstreckung durch eine Sperrklinke (51) gehalten ist, die, wenn die Schlauchwicklung ihren maximalen Durchmesser erreicht, automatisch durch ein gegenwirkendes Glied (54), das an dem Vorrichtungsgehäuse befestigt ist, gelöst wird.

7. Vorrichtung nach Anspruch 1, **dadurch gekennzeichnet**, daß die Eingriffs- und Nichteingriffsglieder ein Antriebskettenrad (25), das freilaufend auf der Antriebswelle angeordnet ist, eine Scheibe (29), die auf der letzteren und parallel zu dem Kettenrad (25) aufgekeilt ist, und einen orthogonalen Zapfen (28), der mit dem Kettenrad fest ist und angeordnet ist, aufweisen, um in Eingriff oder in Nichteingriff mit in gleichem Abstand voneinander angeordneten halbkreisförmigen Nuten (30), die in den Rand der Scheibe (29) eingeformt sind, zu gelangen, wobei der Zapfen mit einem Querschlitz (31) durch eine Hälfte seines Querschnittes versehen ist und wobei der Eingriff/Nichteingriff durch Drehen des Zapfens derart bestimmt ist, daß der feste Teil des Zapfens über dem Schlitz entweder mit den halbkreisförmigen Nuten zusammenwirkt oder nicht zusammenwirkt.

8. Vorrichtung nach Anspruch 7, **dadurch gekennzeichnet**, daß der Zapfen ein gebogenes Ende (34) aufweist, das, wenn der feste Teil des Zapfens in einer Nut liegt, verhindert, daß eine Hilfsantriebsmuffe auf dem Ende der Antriebswelle (26) befestigt wird.

## Revendications

1. Dispositif pour transmettre un mouvement de rotation pas à pas d'une quantité réglable à un tambour d'enroulement de tuyau (5) d'un dispositif d'arrosage automatique pour irrigation du type comportant une turbine (11) entraînée par l'eau d'irrigation ellemême et ayant sur son arbre (14) une première manivelle (15) à laquelle est connectée une extrémité d'une tige de connexion (16), dont l'autre extrémité est connectée à une seconde manivelle (20) qui est plus longue que la première manivelle, laquelle au moyen de moyens d'entraînement par un dispositif à roue libre pour transmettre le mouvement de la seconde manivelle à l'arbre du tambour, le moyen de transmission comportant des moyens d'engagement et de désengagement (25, 28, 29) caractérisé par le fait qu'à la première manivelle (15) est connectée une première tige de connexion (16), la grosse extrémité de laquelle est contrainte à se déplacer alternativement selon un trajet sensiblement rectiligne de direction variable et se trouve elle-même connectée à a grosse extrémité d'une seconde tige de connexion (18) connectée à la seconde manivelle (20) et qui par l'intermédiaire du dispositif à roue libre entraîne une roue dentée (23) à laquelle des moyens (24, 38) sont connectés pour transmettre le mouvement d'entraînement à l'arbre du tambour (5), des moyens (8) étant prévus lesquels sont sensibles au diamètre d'enroulement du tuyau sur le tambour lesquels sont disposés pour orienter la direction dudit trajet sensiblement linéaire à partir d'une direction voisine de l'axe de ladite seconde tige de connexion (8) vers une direction sensiblement orthogonale.

2. Dispositif tel que revendiqué à la revendication caractérisé en ce que la turbine d'entraînement (10) est une turbine comportant des ailettes radiales (11), l'entrée d'eau (12) étant inclinée dans le sens de rotation et disposée d'un côté du boîtier de la turbine et la sortie d'eau (13) étant disposée du côté opposé et décalée par rapport à l'entrée d'un angle compris entre 45 et 175 degrés.

3. Dispositif tel que revendiqué à la revendication caractérisé en ce que les moyens pour orienter la direction du trajet de la grosse extrémité de ladite première tige de connexion (16) comportent un senseur (8) qui se présente sous la forme d'un levier sensible au diamètre d'enroulement du tuyau et est connecté par une tige (42, 47) à un levier à bascule (19) qui pivote autour de l'axe de ladite première manivelle (15), l'extrémité opposée dudit levier à bascule étant connectée par une tige de liaison (17) à la grosse extrémité de ladite première tige de connexion (6).

4. Dispositif tel que revendiqué à la revendication 3 caractérisé en ce que ladite tige (42, 47) est une tige télescopique qui assume de façon stable une position d'extension minimum, dans laquelle le levier à bascule (19) restreint la grosse extrémité de ladite première tige de connexion (16) de telle sorte qu'elle oscille dans une direction sensiblement orthogonale par rapport à l'axe de ladite seconde tige de connexion (18) ou dans une position d'élongation maximum dans laquelle le levier à bascule (19) restreint la grande extrémité de ladite première tige de connexion (16) de telle sorte qu'elle oscille dans une position intermédiaire entre ladite direction orthogonale et l'axe de ladite seconde tige de connexion (18).

5. Dispositif tel que revendiqué à la revendication 3 caractérisé en ce que la longueur maximum de ladite tige télescopique (42, 47) peut être ajustée au moyen d'un dispositif à filetage à vis interne (47, 48).

6. Dispositif tel que revendiqué à la revendication 3 caractérisé en ce que ladite tige (42, 47) est maintenue dans sa position d'élongation maximum par un cliquet (51) qui, lorsque l'enroulement du tuyau atteint son diamètre maximum, est automatiquement libéré par un élément de contre-action (54) fixé au boîtier du dispositif.

7. Dispositif tel que revendiqué à la revendication 1 caractérisé en ce que les moyens d'engagement et de désengagement consistent en une roue dentée d'entraînement (25) montée folle sur l'arbre entraîné, un disque (29) claveté sur ce dernier et parallèle à la roue dentée (25) et une broche orthogonale (28) solidaire de ladite roue dentée et conçue pour engager et libérer des encoches semi-circulaires équidistantes (30) formées dans le bord du disque (29), ladite broche étant prévue avec une fente transversale (21) à travers une moitié de sa section et ladite opération d'engagement/désengagement étant déterminée par la rotation de la broche de telle sorte que la partie pleine de la broche au-delà de la fente interfère ou n'interfère pas avec lesdites encoches semi-circulaires.

8. Dispositif tel que revendiqué à la revendication 7 caractérisé en ce que la broche comporte une extrémité coudée (34) qui, lorsque la partie pleine de la broche se trouve à l'intérieur d'une encoche, empêche le mouvement d'un fourreau d'entraînement auxiliaire monté à l'extrémité de l'arbre entraîné (26).

FIG. 1

FIG. 2

FIG. 4

FIG. 3

FIG. 5

FIG. 6

EP 0 222 430 B1